Europäisches Patentamt

European Patent Office

Office européen des brevets

(11) Veröffentlichungsnummer: **0 369 275**
**A1**

(12) **EUROPÄISCHE PATENTANMELDUNG**

(21) Anmeldenummer: **89120479.4**

(51) Int. Cl.⁵: **C02F 1/52**

(22) Anmeldetag: **06.11.89**

(30) Priorität: **14.11.88 DE 3838532**

(43) Veröffentlichungstag der Anmeldung:
**23.05.90 Patentblatt 90/21**

(84) Benannte Vertragsstaaten:
**ES GR**

(71) Anmelder: **Henkel Kommanditgesellschaft auf Aktien**
**Postfach 1100 Henkelstrasse 67**
**D-4000 Düsseldorf 1(DE)**

(72) Erfinder: **Endres, Helmut, Dr.**
**Benrodestrasse 82**
**D-4000 Düsseldorf 13(DE)**
Erfinder: **Geismar, Günter, Prof. Dr.**
**Ratherstrasse 30**
**D-4150 Krefeld 1(DE)**
Erfinder: **Hansen, Angela**
**Kapitelstrasse 47**
**D-4040 Neuss 1(DE)**

(54) **Fällmittel oder Flockungsmittel zur Abwasserbehandlung und Verfahren unter Verwendung dieser Mittel.**

(57) Die vorliegende Erfindung betrifft ein Fällmittel oder Flockungsmittel zur Abwasserreinigung, wie in der Beschreibung definiert, dadurch gekennzeichnet, daß es einen gewissen Anteil an hydrophilen Lösungsmitteln aufweist und so die Agglomeration der Primärteilchen zu in Wasser nicht zerfallenden Sekundärteilchen soweit verhindert wird, daß deren mittlerer Teilchendurchmesser in einer wäßrigen Suspension kleiner als 2 μm ist, und keine Teilchen mit einem Teilchendurchmesser von mehr als 10 μm vorhanden sind, und das erhältlich ist, indem man
(a) entweder die als Ausgangsstoffe für die Herstellung dieser Doppelschicht-Hydroxide verwendeten Salze in zueinander äquivalenten Mengen in einem Lösungsmittel einem gemeinsamen Reaktionsort zuführt und nach der Fällung das Präzipitat, gegebenenfalls nach Waschen mit einem Lösungsmittel, in feuchter Form, ohne eine vorherige Trocknung über einen Feststoffgehalt von 70 Gew.-% hinaus, einsetzt oder
(b) das Präzipitat in situ unter Berücksichtigung obiger Maßnahmen im zu behandelnden Abwasser erzeugt, ihre Herstellung und Verfahren unter Verwendung dieser Mittel.

EP 0 369 275 A1

## Fällmittel oder Flockungsmittel zur Abwasserbehandlung und Verfahren unter Verwendung dieser Mittel

Die vorliegende Erfindung betrifft Fällmittel oder Flockungsmittel zur Abwasserbehandlung, mit denen insbesondere Wäschereiabwässer gereinigt werden können. Die Erfindung betrifft weiterhin Verfahren unter Verwendung dieser Mittel.

Die Versorgung von Industrie und Haushalten mit Frischwasser wird zunehmend schwieriger. Dies gilt für die Ballungsgebiete Mitteleuropas und besonders für Trockengebiete Südeuropas, der USA etc. Die erhöhten Aufwendungen zur Aufbereitung von Uferfiltraten oder gar Oberflächenwässern machen sich in einem steigenden Kostendruck bemerkbar. Daher ist es sowohl aus ökologischen als auch aus wirtschaftlichen Gründen angezeigt, verstärkt nach Möglichkeiten des Wasserrecyclings durch geeignete Aufbereitung gebrauchten Wassers zu suchen. Beispielsweise gilt dies für Wäschereibetriebe, für die Möglichkeiten zur Frischwassereinsparung in der Literatur diskutiert werden (z.B. E. Köppelmann, W.-A. Roland und H. Grund, "Möglichkeiten des Wasserrecyclings in Wäschereibetrieben", Reiniger + Wäscher Bd. 35, Heft 5, 20-26 (1982)).

Die Aufgabe der Erfindung besteht einmal darin, ein neues Fällmittel oder Flockungsmittel zur Abwasserbehandlung, insbesondere für Wäschereiabwasser, zur Verfügung zu stellen.

Weitere Aufgabe der Erfindung ist die Bereitstellung eines Abwasserbehandlungsverfahrens unter Verwendung dieser Fällmittel oder Flockungsmittel.

Hierfür werden frisch gefällte kationische Schichtverbindungen der allgemeinen Zusammensetzung

$$M(II)_{1-x}M(III)_x(OH)_2A_x \cdot nH_2O$$

eingesetzt, wobei

M(II) für ein zweiwertiges Metallion,

M(III) für ein dreiwertiges Metallion,

A für ein Äquivalent einer Säure

stehen und

x zwischen 0,01 und 0,5 und

n zwischen 0 und 20

liegen,

die in einer im weiteren beschriebenen speziellen Form vorliegen.

Die Flockung von Trübstoffen aus Abwasser unter Verwendung von Salzen dreiwertiger Metalle, insbesondere Fe(III)-Ionen und Al(III)-Ionen, ist bewährter Stand der Technik. Über Grundlagen und Ausführungsformen dieser Verfahren gibt es eine umfangreiche Literatur. Als Beispiel sei das Buch von Hermann H. Hahn, "Wassertechnologie", Springer-Verlag 1987, Kapitel 4, angeführt. Als Mechanismus wird angenommen, daß die genannten Metallionen bei dem pH-Wert von Haushaltsabwasser zu positiv geladenen oligomeren Hydroxyverbindungen hydrolysieren und durch coulombsche Wechselwirkung die negativ geladenen Schmutz-Suspensa destabilisieren und ausflocken. Durch Einschluß in oder Adsorption an die so gebildeten Flocken können weitere der Flockung nicht zugängliche Abwasserinhaltsstoffe entfernt werden. Die Abtrennbarkeit der Schmutzflocken wird üblicherweise durch die Zugabe von Flockungshilfsmitteln (organische Polymere unterschiedlichen Ladungszustandes) begünstigt.

Allerdings besteht ein Nachteil dieser Verfahren in der oft nur unbefriedigenden Separierbarkeit der Flocken. Dies gilt insbesondere für die Aufgabenstellung, Schmutzstoffe aus Wäschereiabwasser zu entfernen, um das gereinigte Wasser wieder für Wäschereizwecke einsetzen zu können. Die Behandlung mit Aluminiumsalzen oder Eisensalzen ergibt auch bei Verwendung polymerer Flockungshilfsmittel häufig schwer filtrierbare Niederschläge und eine stark getrübte "Reinwasserphase". Beispielsweise wird in der FR-A-24 66 438 ein Verfahren zur Reinigung von Wäschereiabwasser durch Zugabe von Aluminiumsulfat mengengleich zum Feststoffgehalt des Abwassers beansprucht. Wie Vergleichsbeispiel 3 zeigt, werden hiermit zwar günstige Trübungswerte und niedrige Gesamtfeststoff-Werte erhalten, die filtrierte Waschlauge erscheint dem Auge jedoch als weißlich-trübe. Der im sauren Bereich liegende pH-Wert ist für ein Recyclieren der Waschlauge ebenfalls ungünstig. Ein ähnliches Verfahren setzt polymere Aluminiumsalze, wie basische Polychlorsulfate des Aluminiums, in Verbindung mit Eisensalzen ein (EP-A-0 261 019).

Die Verwendung schichtartig aufgebauter Festkörper anderer Art zur Wasserbehandlung ist ebenfalls bekannt. Hierbei werden entweder Verbindungen mit negativen Schichtladungen wie beispielsweise das Tonmineral Bentonit (z.B. DE-AS 1 642 886, DE-OS 25 29 099), gegebenenfalls in Kombination mit Natriumaluminat (DE-OS 36 31 472), oder Verbindungen mit weitgehend neutralen Schichten, wie speziell gefälltes Calciumhydroxid oder Magnesiumhydroxid (z.B. DD-PS 1580 25), eingesetzt. Während Bentonite durch Coulomb-Wechselwirkungen bevorzugt posi tiv geladene Verunreinigungen adsorbieren, binden die neutralen Hydroxide durch van der Waals-Wechselwirkungen Verunreinigungen unabhängig von deren Ladungszustand. Dies gilt auch für Raumnetzverbindungen wie Zeolithe, deren Verwendung in diesem Zusammenhang ebenfalls vorgeschlagen wurde (siehe vorstehend zitierten Aufsatz von E. Köppelmann et al.). Da in den letzteren Fällen keine starken elektrostatischen Kräfte die Bindung unterstützen, ist die Reinigungswirkung wenig ausgeprägt. Das Vergleichbeispiel 2 zeigt die Wirkung des Schichtsilicates Bentonit auf die Waschlauge: Die Separierbarkeit der festen Phase ist ungenügend.

Die vorliegende Erfindung stellt sich demgegenüber die Aufgabe, vorzugsweise negativ geladene Abwasserinhaltsstoffe, wie sie besonders in Wäschereiabwässern auftreten (z.B. Aniontenside und Buildersubstanzen, aber auch die bei üblichen pH-Werten von Waschflotten negativ geladenen Schmutzpartikel) wirksam zu entfernen. Als Reagenz bieten sich Schichtverbindungen mit positiver Schichtladung an. Solche Verbindungen sind unter der Bezeichnung "Doppelschichthydroxide" in der Literatur (z.B. R. Allmann, Doppelschichtstrukturen mit brucitähnlichen Schichtionen ... ", Chimia 24, 99-108 (1970)) bekannt.

Chemisch stellen sie gemischte basische Hydroxosalze zwei-und dreiwertiger Metallionen dar und lassen sich durch die allgemeine Formel charakterisieren:

$M(II)_{1-x}M(III)_x(OH)_2A_x \cdot nH_2O$

wobei

M(II) für ein zweiwertiges Metallion,

M(III) für ein dreiwertiges Metallion,

A für ein Äquivalent einer ein- oder mehrbasischen Säure

stehen und

x zwischen 0,01 und 0,5 und

n zwischen 0 und 20

liegen.

Einige Eigenschaften dieser Verbindungsklasse, wie deren Verwendung als Katalysatormaterial, als Ionenaustauscher und einige medizinische Anwendungen wurden von W.T. Reichle zusammenfassend beschrieben ("Anionic Clay Minerals", CHEMTECH, Jan. 1986, S. 58-63). Ein gut charakterisierter Vertreter dieser Stoffgruppe ist der als Mineral in der Natur vorkommende, aber auch synthetisch herstellbare Hydrotalcit, ein Magnesium-Aluminium-Hydroxycarbonat der ungefähren Zusammensetzung

$Mg_6Al_2(OH)_{16}CO_3 \cdot 4H_2O$,

dessen Struktur röntgenographisch bestimmt wurde (R. Allmann und H.P. Jepsen, "Die Struktur des Hydrotalkits", N. Jahrb. Mineral. Monatsh. 1969, S. 544-551). Solche Verbindungen haben gegenüber organischen Flockungsmitteln den großen ökologischen Vorteil, bereits in mineralisierter Form vorzuliegen und daher keinen biologischen Abbau zu erfordern.

Die Verwendung von pulverförmigen oder pelletisierten Hydrotalcit-artigen Festkörpern ist in einigen Patentschriften auch für die Wasserreinigung beschrieben.

Chemical Abstracts, Band 91, Referat Nr. 216 265s (1979), eine Zusammenfassung der JP-A-54/93854, beschreibt, daß man mittels einer Hydrotalcit-artigen chemischen Verbindung Phos phat enthaltende Abwässer mittels der Sorbtions- und Austauscheigenschaften dieser Verbindung reinigen kann.

Chemical Abstracts, Rand 103, Referat Nr. 202 527h (1985), eine Zusammenfassung der EP-A-0 152 010, beschreibt eine Methode zur Reinigung von Kühlwasser in Atomreaktoren mittels eines calcinierten Hydrotalcit-haltigen Festkörpers.

Es lag daher auf den ersten Blick nahe, solche Verbindungen auch für die Reinigung von Wäschereiabwässern einzusetzen. Verwendet man hierfür aber getrocknete oder gepulverte Produkte (Vergleichsbeispiel 4), so ergibt sich kein Vorteil gegenüber den genannten, aus dem Stand der Technik bekannten Festkörpern. Die filtrierte Waschlauge ist stark getrübt.

Der vorliegenden Erfindung lag somit die Aufgabe zugrunde, ein neuartiges Fällmittel oder Flockungsmittel zur Abwasserbehandlung, insbesondere aber zur Behandlung von Wäschereiabwässern, zur Verfügung zu stellen, mit dessen Hilfe die Abwässer besser gereinigt werden können und die zu optisch fast völlig klaren Lösungen führen.

Es wurde nun überraschend gefunden, daß speziell hergestellte und feucht gehaltene Hydrotalcit-Mineralien der vorstehend beschriebenen Art in pastöser Form mit einem Wassergehalt (ermittelt durch Trocknung für 4 h bei 110 °C) von mindestens 30 Gew.-% eine deutlich gesteigerte Reinigungswirkung für Abwasser aufweisen und zu optisch fast oder völlig klaren Lösungen führen.

Die vorliegende Erfindung betrifft Fällmittel oder Flockungsmittel zur Abwasserbehandlung, bestehend aus Doppelschichthydroxiden der allgemeinen Zusammensetzung

$[M(II)_{1-x}M(III)_x(OH)_2]^{x+}(A^-)_x \cdot nH_2O$,

wobei M(II) für mindestens ein zweiwertiges Metallion,

M(III) für mindestens ein dreiwertiges Metallion und

A für ein Äquivalent einer oder mehrerer ein-oder mehrbasischer Säuren
stehen,
x zwischen 0,01 und 0,5 und
n zwischen 0 und 20
liegen,
das dadurch gekennzeichnet ist, daß
- es einen Mindestgehalt an hydrophilen Lösungsmitteln von 30 Gew.-% aufweist und dadurch
- die Agglomeration der Primärteilchen zu in Wasser nicht zerfallenden Sekundärteilchen soweit verhindert wird, daß deren mittlerer Teilchendurchmesser in einer wäßrigen Suspension kleiner als 2 $\mu$m ist und keine Teilchen mit einem Teilchendurchmesser von mehr als 10 $\mu$m vorhanden sind
und das erhältlich ist, indem man
(a) entweder die als Ausgangsstoffe für die Herstellung dieses Doppelschicht-Hydroxids verwendeten Salze in zueinander äquivalenten Mengen in einem Lösungsmittel einem gemeinsamen Reaktionsort zuführt und nach der Fällung das Präzipitat, gegebenenfalls nach Waschen mit einem Lösungsmittel, in pastöser Form, ohne eine vorherige Trocknung über einen Feststoffgehalt von 70 Gew.-% hinaus, einsetzt oder
(b) das Präzipitat in situ unter Berücksichtigung obiger Maßnahmen im zu behandelnden Abwasser erzeugt.

Die Messung des mittleren Teilchendurchmessers in der wäßrigen Suspension erfolgt in einer dem Fachmann bekannten Art und Weise mittels eines Coulter Counters der Firma Coulter Electronic Ltd., England, unter Verwendung von 1 Gew.-% wäß riger Natriumchloridlösung als Elektrolyt. Die genannten Meßbedingungen sind im Manual zu diesem Gerät erläutert.

Die Verfahrensweise zur Herstellung der erfindungsgemäßen Fällmittel oder Flockungsmittel besteht darin, daß man die Ausgangsstoffe kontinuierlich einem Reaktionsort zuführt, so daß ein Überschuß einer der Komponenten während der Reaktion vermieden wird. Die kontinuierlich durchgeführte Fällungsreaktion ist für die Herstellung von Kompositionshydroxiden bekannt, die beispielsweise als Säurebindemittel verwendet werden, wie in Anspruch 4 der DE-OS 20 61 156 beschrieben. Eine Alternative zu dieser Ausführungsform für diese Zusammenführung der Ausgangsstoffe, nämlich ein Zusammenpumpen der Lösungen der Ausgangsstoffe durch ein Y-Rohr, wird in der EP-A-0 207 811 beschrieben, die gemischte Metallhydroxide betrifft, die als Gelbildungsmittel für Bohrflüssigkeiten und ähnliches verwendet werden.

Im Sinne dieser Erfindung ist es weiterhin wesentlich, das Primärteilchenkollektiv des erfindungsgemäßen Fällmittels oder Flockungsmittels bis zur Verwendung agglomerationsstabil zu halten. Dieser Zustand wird im allgemeinen erfindungsgemäß dadurch erreicht, daß die Trocknung der nach dem Fällen vorliegenden Suspension nach Erreichen eines pastösen Zustandes mit mindestens 30 Gew.-% Rest an hydrophilen Lösungsmitteln beendet wird. Man kann annehmen, daß hierbei die durch das spezielle Fällverfahren erhaltenen besonders feinteiligen Primärteilchen in einem dispergierten Zustand gehalten werden, während sie bei der Trocknung zu nicht mehr zerfallenden Sekundärteilchen agglomerieren. Dieser Agglomerations-Effekt wird auch in der oben genannten EP-A-0 207 811 beschrieben, wo zu dessen Vermeidung die Zugabe von Glycerin oder anderen Polyolen empfohlen wird.

Bei der Durchführung des erfindungsgemäßen Verfahrens kann auf das Zumischen von Polyolen verzichtet werden, die zu einer zusätzlichen Verschmutzung des zu behandelnden Abwassers führen würden. Im Sinne der vorliegenden Erfindung ist es bevorzugt, auf eine Isolierung des eingesetzten Doppelschicht-Hydroxides überhaupt zu verzichten und die Fällung direkt in das zu behandelnde Abwasser vorzunehmen (Beispiel 2). Hierdurch wird jeglicher Effizienzverlust durch Alterungsprozesse und Agglomerationsprozesse vermieden und man erhält einen sehr gut abtrennbaren Niederschlag und eine wasserklare Reinwasserphase.

Ein Nachteil dieser Vorgehensweise besteht jedoch darin, daß zum Ansetzen der Ausgangsstoff-Lösungen große Mengen frisches Prozeßwasser benötigt werden, was technisch aufwendig ist und spätestens dann zu Problemen führt, wenn die erfindungsgemäßen Fällmittel oder Flockungsmittel und das mit diesen angewandte Verfahren in Wassermangelgebieten eingesetzt werden sollen. Demgemäß ist es besonders bevorzugt, das Doppelschicht-Hydroxid direkt in dem zu behandelnden Abwasser zu erzeugen. Hierzu löst man beispielsweise die erforderlichen Mengen an Ausgangsstoffen wasserlöslicher Salze mit zwei- und dreiwertigen Metallionen, vorzugsweise mit Magnesium- und Aluminiumionen, in der minimalen Menge Wasser auf und gibt diese konzentrierte Lösung in das zu behandelnde Abwasser (Beispiel 5). Man kann die festen wasserlöslichen Salze auch direkt in dem Abwasservolumen auflösen (Beispiele 3 und 4). Bei alkalischem Abwasser, wie es Wäschereiabwasser üblicherweise darstellt, tritt dabei je nach pH-Wert rasch eine leichte Flockung ein. Zum Vervollständigen der Flockung stellt man gegebenenfalls mit Lauge, beispielsweise Natronlauge, auf einen pH-Wert zwischen 8 und 12 ein, wobei pH-Werte um 11 zu einer klareren Reinwasserphase, allerdings mit erhöhtem Elektrolytgehalt, führen. Bei pH-Werten um 9 verbleibt nach Abtrennen des Niederschlages eine leichte Trübung, der Gehalt des gereinigten Wassers an

4

gelösten/dispergierten Bestandteilen ist jedoch geringer als bei höheren pH-Werten.

Das Abtrennen der bei der Behandlung gebildeten Niederschläge kann mit den gängigen Methoden wie Sedimentation, Flotation, Filtration oder Zentrifugieren erfolgen. Ähnliches gilt für ein weitergehendes Entwässern des erhaltenen Schlammes, wofür z.B. eine Kammerfilterpresse verwendet werden kann. Das erhaltene Reinwasser ist völlig klar bis leicht getrübt und weist einen Elektrolytgehalt zwischen etwa 6 und etwa 24 g/l auf.

Sollte sich dieser Elektrolytgehalt wegen des Aufsalz-Effektes bei weitgehend geschlossenem Wasserkreislauf als störend erweisen, kann er nach den aus dem Stand der Technik bekannten Methoden, z.B. durch Umkehrosmose oder Elektrodialyse, herabgesenkt werden. Der infolge des Elektrolyt-Gehaltes im alkalischen Bereich liegende pH-Wert ist dabei für eine Wiederverwendung als Waschlauge prinzipiell günstig.

Es sei angemerkt, daß sich Trennprozesse durch Membranverfahren wie Ultrafiltration, Umkehrosmose oder Elektrodialyse nicht direkt zur Reinigung von Wäschereiabwasser einsetzen lassen, da die Membranen bei nicht vorbehandeltem Abwasser rasch verstopfen. Dieses Problem wird in einer Studie von G.J. Van Gils, M. Pirbazari, S.-H. Kim und J. Shorr ("Treatment of Emulsified and Colloidal Industrial Wastewater Using a Combined Ultrafiltration-Carbon Adsorption Process", Proc. 39th Ind. Waste Conf. Purdue University 39, 269-280 (1985)) untersucht. Als Lösung geben diese Autoren die Vorbehandlung des Abwassers mit (teurer) Aktivkohle oder mit dem weniger effektiven (siehe Vergleichsbeispiel 2) Bentonit an. Das erfindungsgemäße Verfahren stellt eine kostengünstige und wirkungsvolle Alternative für die erforderliche Vorbehandlung dar.

Die Erfindung wird im folgenden durch Ausführungsbeispiele erläutert.

Für die Beispiele und Vergleichsbeispiele wurde gebrauchte Waschlauge (Abwasser des Waschganges, Blauzeugwäsche) einer betrieblichen Großwäscherei verwendet. Jeweils 500 ml der Waschlauge wurden bei Raumtemperatur unter Rühren mit einem Magnetrührer mit der angegebenen Reagensmenge versetzt und fünf Minuten gerührt. (In einigen Versuchen wurden anschließend 2 ppm eines stark anionischen Flockungshilfsmittels (P$_3$-Ferrocryl[R] 8723, HENKEL KGaA; nähere Einzelzeiten hierzu: Technische Information K7-4/2)) zugegeben und weitere fünf Minuten bei verringerter Drehzahl weitergerührt). Anschließend wurde durch ein Faltenfilter (Porengröße 5,8 μm nach DIN 12448) filtriert und die Filtrationszeit für die ersten 200 ml bestimmt. In den Filtraten wurden der pH-Wert, der Gesamt-Elektrolytgehalt (durch Eintrocknen bei 110 °C) und der relative Trübungsgrad ermittelt. Zur Trübungsmessung wurde in einem Perkin-Elmer Doppelstrahl-Spektrophotometer 124 die Absorption für Licht der Wellenlänge 520 nm in einer 1 cm-Küvette gemessen. Die Trübung der unbehandelten Waschlauge wurde als 100 % gesetzt und die Werte der behandelten Proben hierauf bezogen.

In den Beispielen und Vergleichsbeispielen werden folgende Abkürzungen verwendet:

Filtrationszeit für 200 ml: FZ;

Trübung in % der unbehandelten Waschlauge: TR;

Aussehen des Filtrates: A;

Feststoffgehalt des Filtrates in g/l: FG;

pH-Wert: pH.

Die Zahlen in Klammern geben die Werte für den Zusatz des Flockungshilfsmittels Ferrocryl[R] an.

Vergleichsbeispiel 1

Unbehandelte Waschlauge

| Ergebnis: | FZ: | 0,8 min |
|---|---|---|
| | TR: | 100 % |
| | A: | schmutzig graubraun |
| | FG: | 7,7 |
| | pH | 11,3. |

Vergleichsbeispiel 2

Fällung mit 4 g Aktiv-Bentonit B

| Ergebnis: | FZ: | 200 (170) min |
|---|---|---|
| | TR: | 14,5 (23,1) % |
| | A: | gelblich trübe (dto.) |
| | FG: | 3,8 (3,8) |
| | pH | 11,2 (11,2). |

## Vergleichsbeispiel 3

Fällung mit 4 g $Al_2(SO_4)_3 \cdot 18H_2O$ gemäß FR-A-2 466 438

| Ergebnis: | FZ: | 7,7 min (dto.) |
|---|---|---|
| | TR: | 4,4 (5,8) % |
| | A: | weißlich trübe (dto.) |
| | FG: | 4,8 (4,9) |
| | pH: | 5,1 (4,7). |

## Vergleichsbeispiel 4

Fällung mit 4 g synthetischem Hydrotalcitpulver (Gewichtsverlust nach Trocknung für 4 h bei 105 °C: 3,2 Gew.-%)

| Ergebnis: | FZ: | 13,1 min (13,5 min) |
|---|---|---|
| | TR: | 21 (31) % |
| | A: | schmutzig grau (dto.) |
| | FG: | 4,1 (3,8) |
| | pH: | 11,2 (11,2). |

## Beispiel 1

Eine Lösung von 410 g Magnesiumnitrat Hexahydrat und 300 g Aluminiumnitrat Nonahydrat in 8 000 g vollentsalztem (VE) Wasser (Lösung I) sowie eine zweite Lösung aus 448 g 50 gew.-%iger Natronlauge und 160 g Natriumcarbonat in 8 000 g VE-Wasser (Lösung II) werden bereitet. Die beiden Lösungen werden mit Schlauchpumpen durch die beiden Schenkel eines Y-förmigen Rohres zusammen in ein Becherglas gepumpt, der entstandene Hydrotalcit-Niederschlag abgesaugt und mit VE-Wasser gewaschen. Von dem pastösen Produkt mit 25 Gew.-% Feststoffgehalt (bestimmt durch Trocknen einer Probe bei 110 °C) werden 16 g (entsprechend 4 g Hydrotalcit) in die Waschlauge eingerührt.

FZ: 55,3 min (101 min)

TR: 7,9 (22,5) %

A: fast klar (dto.)

FG: 9,5 (6,25)

pH: 11,2 (11,3).

6

Beispiel 2

Die Fällung des Fällmittels oder Flockungsmittels Hydrotalcit wird direkt in die Waschlauge hinein vorgenommen. Hierzu werden jeweils 250 ml der Reagenslösungen I und II aus Beispiel 1 durch die beiden Schenkel eines Y-förmigen Rohres in 500 ml Waschlauge gepumpt. Die erhaltene Mischung (1 000 ml) wird zweigeteilt, die eine Hälfte sofort und die zweite Hälfte nach Versetzen mit Ferrocryl$^R$ filtriert.

FZ: 1,5 min (1,6 min)
TR: 0,7 (0,7) %
A: wasserklar (wasserklar)
FG: 24 (23,5)
pH: 12,4 (12,3).

Beispiel 3

Das Fällmittel oder Flockungsmittel wird in der Waschlauge direkt erzeugt: in 500 ml Waschlauge werden 1,73 g Aluminiumnitrat Nonahydrat und 2,27 g Magnesiumnitrat Hexahydrat gelöst und der pH-Wert mit Natronlauge auf 9 eingestellt.

FZ: 29,5 min (2,3 min)
TR: 3,6 (13) %
A: fast klar (dto.)
FG: 12,6 (8,0)
pH: 9,1 (9,4).

Beispiel 4

Wie in Beispiel 3 beschrieben wird ein Fällmittel oder Flockungsmittel erzeugt, allerdings werden anstelle des Magnesiumnitrates 2,27 g Calciumnitrat Tetrahydrat eingesetzt.

FZ: 6 min (3,2 min)
TR: 8,7 (7,9) %
A: fast klar (dto.)
FG: 10,4 (11,4)
pH: 9,1 (9,1).

Vergleichsbeispiel 5

Für dieses Vergleichsbeispiel wurde eine neue Waschlauge verwendet.

FZ: 1,1 min
TR: 100 %
A: schmutzig grau-beige
FG: 10,3
pH: 12,4.

Beispiel 5

Das Fällmittel oder Flockungsmittel wurde in einer neuen Waschlauge erzeugt und hierfür die Ausgangsstoffe in einem kleinen Wasservolumen gelöst zugegeben: 500 ml Waschlauge wurden ohne zu rühren mit einer Lösung von 0,65 g Aluminiumnitrat Nonahydrat und 0,85 g Magnesiumnitrat Hexahydrat in 5 ml vollentsalztem Wasser versetzt. Nach einer Wartezeit von 5 min wurde leicht aufgerührt und filtiert.

FZ: 45 min (42 min)
TR: 7,5 (10) %
A: wasserklar (dto.)
FG: 12,2 (11,6)
pH: 11,4 (11,5).

**Ansprüche**

1. Fällmittel oder Flockungsmittel zur Abwasserbehandlung, bestehend aus Doppelschicht-Hydroxiden der allgemeinen Zusammensetzung

$[M(II)_{1-x}M(III)_x(OH)_2]^{x+}(A^-)_x \cdot nH_2O$,

wobei M(II) für mindestens ein zweiwertiges Metallion,
M(III) für mindestens ein dreiwertiges Metallion und
A für ein Äquivalent einer oder mehrerer ein-oder mehrbasischer Säuren
stehen,
x zwischen 0,01 und 0,5 und
n zwischen 0 und 20
liegen,
dadurch gekennzeichnet, daß
- es einen Mindestgehalt an hydrophilen Lösungsmitteln von 30 Gew.-% aufweist und dadurch
- die Agglomeration der Primärteilchen zu in Wasser nicht zerfallenden Sekundärteilchen soweit verhindert wird, daß deren mittlerer Teilchendurchmesser in einer wäßrigen Suspension kleiner als 2 μm ist und keine Teilchen mit einem Teilchendurchmesser von mehr als 10 μm vorhanden sind
und das erhältlich ist, indem man
(a) entweder die als Ausgangsstoffe für die Herstellung dieses Doppelschicht-Hydroxids verwendeten Salze in zueinander äquivalenten Mengen in einem Lösungsmittel einem gemeinsamen Reaktionsort zuführt und nach der Fällung das Präzipitat, gegebenenfalls nach Waschen mit einem Lösungsmittel, in pastöser Form, ohne eine vor herige Trocknung über einen Feststoffgehalt von 70 Gew.-% hinaus, einsetzt oder
(b) das Präzipitat in situ unter Berücksichtigung obiger Maßnahmen im zu behandelnden Abwasser erzeugt.

2. Mittel nach Anspruch 1, dadurch gekennzeichnet, daß dieses als wäßrige Suspension oder Paste mit einem Feststoffgehalt von 0,5 bis 40 Gew.-% vorliegt.

3. Mittel nach Anspruch 1, dadurch gekennzeichnet, daß in diesem M(II) für Magnesium oder Calcium und M(III) für Aluminium oder Eisen stehen.

4. Mittel nach Anspruch 1, dadurch gekennzeichnet, daß in diesem A für ein Anion steht, das ausgewählt ist aus Carbonat, Sulfat, (Poly-)Phosphat, Nitrat oder Chlorid.

5. Mittel nach Anspruch 1 oder 4, dadurch gekennzeichnet, daß in diesem A für das Anion Carbonat steht.

6. Verfahren zur Herstellung eines Fällmittels oder Flockungsmittels zur Abwasserbehandlung, bestehend aus Doppelschicht-Hydroxiden der allgemeinen Zusammensetzung

$[M(II)_{1-x}M(III)_x(OH)_2]^{x+}(A^-)_x \cdot nH_2O$,

wobei M(II) für mindestens ein zweiwertiges Metallion,
M(III) für mindestens ein dreiwertiges Metallion und
A für ein Äquivalent einer oder mehrerer ein-oder mehrbasischer Säuren
stehen,
x zwischen 0,01 und 0,5 und
n zwischen 0 und 20
liegen,
dadurch gekennzeichnet, daß man dieses erhält, indem man
(a) entweder die als Ausgangsstoffe für die Herstellung dieses Doppelschicht-Hydroxids verwendeten Salze in zueinander äquivalenten Mengen in einem Lösungsmittel einem gemeinsamen Reaktionsort zuführt und nach der Fällung das Präzipitat, gegebenenfalls nach Waschen mit einem Lösungsmittel, in pastöser Form, ohne eine vorherige Trocknung über einen Feststoffgehalt von 70 Gew.-% hinaus, bereitstellt oder
(b) das Präzipitat in situ unter Berücksichtigung obiger Maßnahmen im zu behandelnden Abwasser erzeugt.

7. Verfahren nach Anspruch 6, dadurch gekennzeichnet, daß man das gemäß Alternative a) hergestellte Fällmittel als wäßrige Suspension oder Paste mit einem Feststoffgehalt von 0,5 bis 40 Gew.-% erhält.

8. Verfahren zur Abwasserbehandlung unter Verwendung der Fällungs- oder Flockungsmittel nach Ansprüchen 1 bis 5.

9. Verfahren nach Anspruch 8, dadurch gekennzeichnet, daß der pH-Wert des zu behandelnden Abwassers nach der Zugabe der als Ausgangsstoffe verwendeten Salze durch Laugenzugabe auf einen Wert zwischen 8 und 13, vorzugsweise zwischen 9 und 12 eingestellt wird.

10. Verfahren nach Anspruch 8 oder 9, dadurch gekennzeichnet, daß das Fällmittel oder Flockungsmittel in einer Menge eingesetzt wird, die dem 0,2- bis 3-fachen Feststoffgehalt des zu behandelnden Abwassers entspricht.

11. Verfahren nach Ansprüchen 8 bis 10, dadurch gekennzeichnet, daß man nach der Ausfällung und Abtrennung der Schmutz phase das Reinwasserfiltrat vor seiner Wiederverwendung als Prozeßwasser mittels Membranverfahren, beispielsweise über eine Umkehrosmose oder Elektrodialyse, weiter entsalzt.

12. Verwendung des Verfahrens gemäß Ansprüchen 8 bis 11 zur Behandlung von negativ geladene Verunreinigungen enthaltenden Abwässern, insbesondere von Wäschereiabwässern.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | CHEMICAL ABSTRACTS, Band 91, 24. Dezember 1979, Seite 305, Zusammenfassung Nr. 216265s, Columbus, Ohio, US; JP-A-79 93 854 (KYOWA CHEMICAL INDUSTRY CO., LTD) 25-07-1979 --- | 1,6 | C 02 F 1/52 |
| A,D | CHIMIA, Band 24, März 1970, Seiten 99-108; R. ALLMANN: "Doppelschichtstrukturen mit brucitähnlichen Schichtionen [Me(II)1-xMe(III)x(OH)2]x+ --- | 1,6 | |
| A | EP-A-0 056 068 (HENKEL) * Seite 6, Zeilen 15-33; Seite 9; Zusammenfassung * --- | 1,12 | |
| A,D | PROCEEDINGS OF THE 39th INDUSTRIAL WASTE CONFERENCE, West Lafayette, Indiana, 8th-10th Mai 1984, Seiten 269-280, US; G.J. VAN GILS et al.: "Treatment of emulsified and colloidal industrial wastewater using a combined ultrafiltration-carbon adsorption . process" --- | 11,12 | |
| A | BE-A- 463 541 (UNIFLOC REAGENTS LTD) * Ansprüche 1,2,8 * ----- | 1,3,6 | RECHERCHIERTE SACHGEBIETE (Int. Cl.5)<br><br>C 02 F |

Der vorliegende Recherchenbericht wurde für alle Patentansprüche erstellt

| Recherchenort | Abschlußdatum der Recherche | Prüfer |
|---|---|---|
| DEN HAAG | 14-12-1989 | GONZALEZ Y ARIAS M.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.......................................................................................
& : Mitglied der gleichen Patentfamilie, übereinstimmendes Dokument

EPO FORM 1503 03.82 (P0403)